Europäisches Patentamt

European Patent Office

Office européen des brevets

(11) Veröffentlichungsnummer: **0 384 030**
**A2**

(12) # EUROPÄISCHE PATENTANMELDUNG

(21) Anmeldenummer: 89123531.9

(22) Anmeldetag: 20.12.89

(51) Int. Cl.5: **B65G 65/46, B30B 15/30**

(30) Priorität: 23.02.89 DE 3905535

(43) Veröffentlichungstag der Anmeldung:
**29.08.90 Patentblatt 90/35**

(84) Benannte Vertragsstaaten:
**AT BE CH FR GB IT LI LU NL SE**

(71) Anmelder: **SIGNODE SYSTEM GMBH**
**Magnusstrasse 18**
**D-4220 Dinslaken(DE)**

(72) Erfinder: **Limper, Andreas, Dipl.-Ing.**
**Von Staufenbergstrasse 10**
**D-5963 Wenden/Schönau(DE)**

(74) Vertreter: **Andrejewski, Walter et al**
**Patentanwälte Andrejewski, Honke & Partner**
**Postfach 10 02 54 Theaterplatz 3**
**D-4300 Essen 1(DE)**

(54) **Vorrichtung für die Einspeisung von Schüttgut.**

(57) Vorrichtung für die Einspeisung von Schüttgut, insbes. von Schnitzeln, in eine Schneckenpumpe oder Schneckenpresse, mit Aufgabetrichter, Einspeiseleitung sowie rotierend angetriebener Förder- und Stopfeinrichtung. Die Förder- und Stopfeinrichtung weist eine zentrale Welle und eine Arbeitswendel auf, die im Bereich des Aufgabetrichters als Schraubenfläche und im Bereich der Einspeiseleitung als Schneckensteg ausgebildet ist. Die Schraubenfläche ist mit einem Spaltabstand der Innenwand des Aufgabetrichters angepaßt. Der Aufgabetrichter besitzt in den Aufgabetrichterinnenraum weisende Stifte, denen Ausnehmungen in der Schraubenfläche der Arbeitswendel zugeordnet sind.

Fig. 1

EP 0 384 030 A2

## Vorrichtung für die Einspeisung von Schüttgut

Die Erfindung betrifft eine Vorrichtung für die Einspeisung von Schüttgut, insbes. von Schnitzeln, in eine Schneckenpumpe oder Schneckenpresse, - mit

Aufgabetrichter, Einspeiseleitung sowie rotierend angetriebener Förder- und Stopfeinrichtung, wobei die Förder- und Stopfeinrichtung eine zentrale Welle und eine Arbeitswendel aufweist, die im Bereich des Aufgabetrichters als Schraubenfläche und im Bereich der Einspeiseleitung als Schnekkensteg ausgebildet ist, wobei die Schraubenfläche mit einem Spaltabstand der Innenwand des Aufgabetrichters angepaßt ist. - Bei den Schnitzeln kann es sich um Papierschnitzel, um Schnitzel aus Metall- oder Kunststofffolie und insbes. um Papierschnitzel oder Schnitzel aus einer Metallfolie handeln, die mit Kunststoff beschichtet sind.

Vorrichtungen des beschriebenen Aufbaus sind in der Praxis in verschiedenen Ausführungsformen bekannt. Ohne weitere Ausbildungen ist die Förderoder Stopfleistung häufig verbesserungsbedürftig, was von der inneren Reibung und dem spezifischen Gewicht des Schüttgutes abhängt. Um die Förder-und Stopfleistung zu erhöhen, ist es bekannt, die Innenwand des Aufgabetrichters mit Nuten zu versehen, die sich auch in die Einspeiseleitung hineinerstrecken können. Das ist aufwendig.

Der Erfindung liegt die Aufgabe zugrunde, bei einer Vorrichtung des eingangs beschriebenen Aufbaus die Förder- und Stopf leistung auf einfache Weise, unter Verzicht auf die Anordnung der vorstehend beschriebenen Nuten, wirksam zu verbessern.

Zur Lösung dieser Aufgabe lehrt die Erfindung, daß der Aufgabetrichter in den Aufgabetrichterinnenraum weisende Stifte besitzt, denen Ausnehmungen in der Schraubenfläche zugeordnet sind. Die Stifte können als radial in den Trichterinnenraum ragende Stifte ausgeführt sein. Nach einer bevorzugten Ausführungsform der Erfindung sind die Stifte über den Umfang des Aufgabetrichters verteilt, wobei sie in einer oder in mehreren Reihen angeordnet sein können. Um die erfindungsgemäße Vorrichtung speziellem Schüttgut anzupassen und um die Förder- und Stopfleistung zu beeinflussen, kann die erfindungsgemäße Vorrichtung mit Stiften unterschiedlicher Länge ausgerüstet werden. Die Stifte sollen im allgemeinen eine Länge aufweisen, die zumindest dem halben Radius des Aufgabetrichters am Ort der Stifte entspricht, sie können jedoch bei einem Schüttgut, welches besonders förder-und stopffeindlich ist, auch länger sein.

Die erreichten Vorteile sind darin zu sehen, daß erfindungsgemäß mit sehr einfachen Mitteln, nämlich durch Anordnung von Stiften, die Förder- und Stopfleistung erheblich verbessert werden kann. Von Vorteil ist fernerhin, daß die Förder-und Stopfleistung durch Austauschen der Stifte unterschiedlichen Verhältnissen, beispielsweise unterschiedlichem Schüttgut, auf einfache Weise angepaßt werden kann.

Im folgenden wird die Erfindung anhand einer lediglich ein Ausführungsbeispiel darstellenden Zeichnung ausführlicher erläutert. Es zeigen in schematischer Darstellung

Fig. 1 einen Vertikalschnitt durch eine erfindungsgemäße Vorrichtung,

Fig. 2 einen Schnitt in Richtung A-A durch den Gegenstand nach Fig. 1.

Die in den Figuren dargestellte Vorrichtung ist für die Einspeisung von Schüttgut, insbes. von Schnitzeln in eine Schnekkenpumpe 1 oder Schneckenpresse bestimmt. Zum grundsätzlichen Aufbau gehören ein Aufgabetrichter 2, eine daran angeschlossene Einspeiseleitung 3 sowie eine rotierend angetriebene Förder- und Stopfeinrichtung 4. Der Antrieb erfolgt im Ausführungsbeispiel über einen Motor 5 mit vorgeschaltetem Getriebe 6. Dieses Aggregat 5, 6 ist auf einer Traverse 7 befestigt, die den Aufgabetrichter 2 in diametraler Richtung überbrückt. Die Förder- und Stopfeinrichtung 4 besitzt eine zentrale Welle 8 und eine Arbeitswendel 9, 10. Diese Arbeitswendel 9, 10 ist im Bereich des Aufgabetrichters 2 als Schraubenfläche 9 und im Bereich der Einspeiseleitung 3 als Schnekkensteg 10 ausgebildet. Die Schraubenfläche 9 ist mit Spaltabstand der Innenwand des Aufgabetrichters 2 angepaßt. Es versteht sich, daß bei der montierten Vorrichtung die zentrale Welle 8 senkrecht angeordnet ist und daß sie so rotiert, wie es der Drehsinn und die Steigung der Arbeitswendel 9, 10 verlangen.

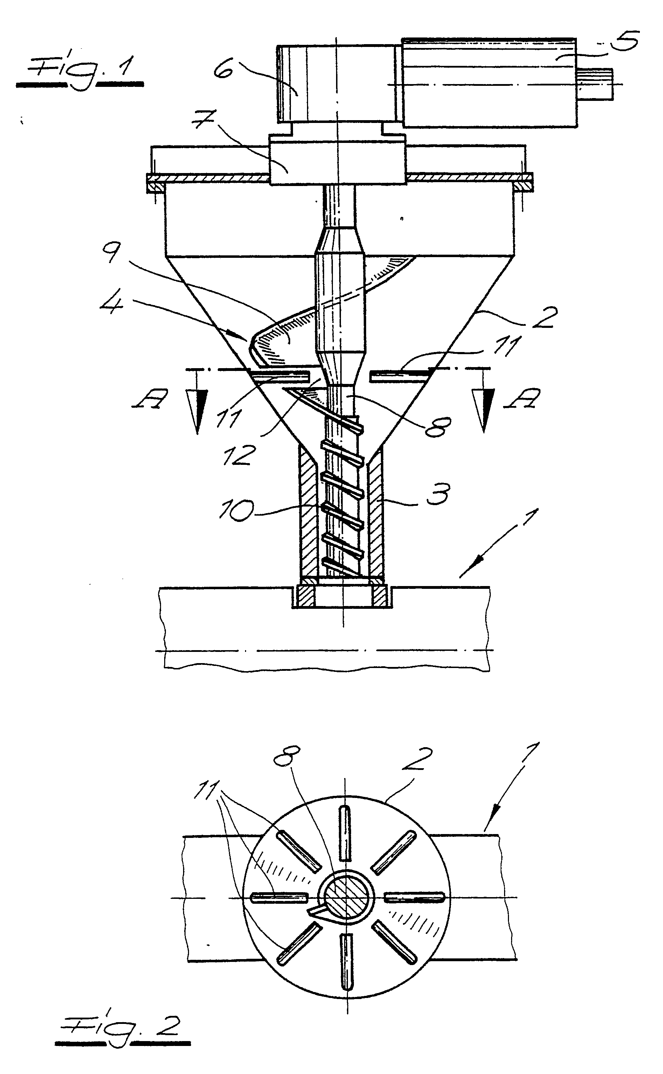

Der Aufgabetrichter 2 besitzt in den Aufgabetrichterinnenraum weisende Stifte 11. Insoweit wird auf eine vergleichende Betrachtung der Fig. 1 und 2 verwiesen, wobei man erkennt, daß den Stiften 11 Ausnehmungen 12 in der Schraubenfläche 9 zugeordnet sind. Im Ausführungsbeispiel und nach bevorzugter Ausführungsform der Erfindung ragen die Stifte 11 radial in den Trichterinnenraum. Sie sind über den Umfang des Aufgabetrichters 2 äquidistant verteilt, und zwar in einer in montierter Stellung der Vorrichtung horizontal verlaufenden Reihe. Die Stifte 11 besitzen eine Länge, die zumindest dem halben Radius entspricht.

## Ansprüche

1. Vorrichtung für die Einspeisung von Schüttgut, insbes. von Schnitzeln, in eine Schneckenpumpe oder Schneckenpresse, - mit Aufgabetrichter, Einspeiseleitung sowie rotierend angetriebener Förder- und Stopfeinrichtung, wobei die Förder- und Stopfeinrichtung eine zentrale Welle und eine Arbeitswendel aufweist, die im Bereich des Aufgabetrichters als Schraubenfläche und im Bereich der Einspeiseleitung als Schneckensteg ausgebildet ist, wobei die Schraubenfläche mit einem Spaltabstand der Innenwand des Aufgabetrichters angepaßt ist, **dadurch gekennzeichnet**, daß der Aufgabetrichter in den Aufgabetrichterinnenraum weisende Stifte besitzt, denen Ausnehmungen in der Schraubenfläche der Arbeitswendel zugeordnet sind.

2. Vorrichtung nach Anspruch 1, dadurch gekennzeichnet, daß die Stifte radial in den Trichterinnenraum ragen.

3. Vorrichtung nach einem der Ansprüche 1 oder 2, dadurch gekennzeichnet, daß die Stifte über den Umfang des Aufgabetrichters verteilt angeordnet sind.

4. Vorrichtung nach einem der Ansprüche 1 bis 3, dadurch gekennzeichnet, daß die Stifte in zumindest einer Reihe angeordnet sind.

5. Vorrichtung nach einem der Ansprüche 1 bis 4, dadurch gekennzeichnet, daß die Stifte eine Länge aufweisen, die zumindest dem Radius entspricht.

Fig.1

Fig.2